# EUROPEAN PATENT SPECIFICATION

(11) **EP 1 089 579 B1**
(45) Date of publication and mention of the grant of the patent: **20.02.2008**
(21) Application number: 00308416.7
(22) Date of filing: 26.09.2000
(51) Int. Cl.: H04Q 7/32, H04B 10/12

(54) **Radio road vehicle communication system with enhanced system extendibility**
Funkkommunikationssystem für Strassenfahrzeug mit verbesserter Systemausdehnung
Système de radiocommunication pour véhicule routier avec extensibilité du système améliorée

(30) Priority: 30.09.1999 JP 27967799
(43) Date of publication of application: 04.04.2001
(73) Proprietor: Oki Electric Industry Co., Ltd., Tokyo (JP); National Institute of Information and Communications Technology Incorporated Administrative Agency, Koganei-shi, Tokyo 184 (JP)
(72) Inventor: Tokuda, Kiyohito, c/o Oki Electric Ind. Co., Ltd., Minato-ku, Tokyo (JP); Fujise, Masayuki, c/o Yokosuka Radio Com. Res. Ct., Yokosuka-shi, Kanagawa (JP)
(74) Representative: Read, Matthew Charles

(56) References cited:
- EP-A- 0 389 062
- EP-A- 0 440 081
- EP-A- 0 476 569
- EP-A- 0 538 635
- EP-A- 0 952 751
- PATENT ABSTRACTS OF JAPAN vol. 005, no. 015 (E-043), 29 January 1981 (1981-01-29) & JP 55 143854 A (NIPPON TELEGR & TELEPH CORP), 10 November 1980 (1980-11-10)

## Description

### BACKGROUND OF THE INVENTION

### Field of the Invention

The present invention relates to a radio Road Vehicle Communication (RVC) system with enhanced system extendibility and more particularly to an ROF (Radio On Fiber) RVC system capable of providing a number of users with various kinds of mobile information services. The mobile information services include DSRC (Dedicated Short Range Communication) services for ITS (Intelligent Transport Systems) to which ETC (Electronic Toll Collection), for example, is applied, satellite broadcast services using BSs (Broadcasting Satellites) and CSs (Communication Satellites), IMT (International Mobile Telecommunications)-2000 that is the next-generation mobile communication system, PDC (Personal Digital Cellular), and PHS (Personal Handyphone System).

### Description of the Background Art

Major components of a conventional RVC system are base stations situated at roadsides and mobile stations identical in number with the base stations. The base stations and mobile stations each have an uplink function for sending a request for an information service and a downlink function for receiving the information service.

The base stations include local transit base stations for communicating with mobile stations by radio. Each local transit base station performs electric-to-optical signal conversion and optical-to-electric signal conversion in order to prevent communication quality from falling. Transmission paths on which light serves as an information carrier are implemented by optical fiber cables. In this sense, the RVC system is called an ROF RVC system.

The ROF RVC system assigns a particular radio frequency to each information service and therefore assigns an antenna having a particular operation characteristic to each radio frequency. For example, when a mobile station is expected to receive N different information services, it is equipped with antennas corresponding in number to the information services.

The conventional ROF RVC system, however, lacks in extendibility because it sends radio data at a particular transmission rate for each information service. This is ascribable to the fact that communication between the mobile stations and the base stations uses different radio frequency bands each being assigned to a particular information service. Therefore, when the system is extended to increase the number of information services for providing multimedia information, the development of a new mobile communication system and the addition of antennas are essential with the ROF RVC system.

PHS is another mobile communication system capable of implementing radio communication in dead areas. A tunnel radio system, for example, belongs to a family of radio communication systems available for such a purpose.

EP 0 538 625 A2 discloses a microcellular mobile communication system comprising a central base station and a plurality of radio base stations connected via optical fibers. Each radio base station is assigned a different frequency band. Radio signals in different frequency bands are transmitted simultaneously via shared optical fiber transmission lines.

### SUMMARY OF THE INVENTION

It is therefore an object of the present invention to provide an RVC system that is easily extendible and reduces the deterioration of communication quality as to a plurality of information services.

According to the invention, a roadside vehicle communication (RVC) system includes a roadside radio base station, a plurality of mobile stations each being communicable with the roadside radio base station by radio for sending an information request via the roadside radio base station and receiving an information via the roadside radio base station, the roadside radio base station comprising a plurality of local base stations each being communicable with the mobile stations within a particular area, a central base station communicable with the information and integrating communication with the local base stations, and optical fiber cables each being laid between the central base station and a particular local base station, said plurality of local base stations each comprising a downlink optical-to-radiowave signal converter for receiving a down-going optical signal, which is propagated through one of the optical fiber cables and contains the information, and converting the optical signal to a down-going radio signal, a first transmit/receive antenna for sending the down-going radio signal or receiving an up-going radio signal sent from any one of the mobile stations and containing the information request and an uplink optical modulator for modulating a light of a preselected wavelength in accordance with the up-going radio signal to thereby generate an up-going optical signal, the central base station comprising an uplink optical-to-radiowave signal converter for receiving the up-going optical signal propagated through the optical fiber cable and converting the optical signals to an up-going radio signal, a downlink optical modulator for modulating a light of a preselected wavelength in accordance with a down-going radio signal containing the information provided by the information server to thereby generate a down-going optical signal, a first multiplexer for multiplexing a plurality of down-going radio signals each lying in a particular frequency band and distributing a resulting multiplexed signal to said plurality of mobile stations, a demultiplexer for demultiplexing a plurality of up-going radio signals received from the mobile stations on a frequency basis and a first frequency converter for upconverting or downconverting a frequency of the up-going radio signal to a particular frequency to a particular frequency or upconverting or downconverting the frequency of the down-going radio signal received to a single preselected radio frequency band and a radio base station for sending an up-going radio signal output from the first frequency converter and lying in the single preselected radio frequency band or receiving the down-going radio signal.

### BRIEF DESCRIPTION OF THE DRAWINGS

The objects and features of the present invention will become more apparent from the consideration of the following detailed description taken in conjunction with the accompanying drawings in which:
FIG. 1 is a block diagram schematically showing an ROF RVC system to which an RVC system embodying the present invention is applied;
FIG. 2 is a schematic block diagram showing a specific configuration of a central base station included in the illustrative embodiment;
FIG. 3 is a schematic block diagram showing a specific configuration of a local base station also included in the illustrative embodiment;
FIG. 4 is a schematic block diagram showing a specific configuration of a mobile station further included in the illustrative embodiment;
FIG. 5 is a schematic block diagram showing a reference ROF RVC system for comparison;
FIG. 6 is a schematic block diagram showing a mobile communication base station included in the system of FIG. 5;
FIG. 7 is a schematic block diagram showing a local transit base station also included in the system of FIG. 5;
FIG. 8 is a schematic block diagram showing a mobile station further included in the system of FIG. 5; and
FIG. 9 is a schematic block diagram showing a specific ETC configuration to which the present invention is applied.

### DESCRIPTION OF THE PREFERRED EMBODIMENT

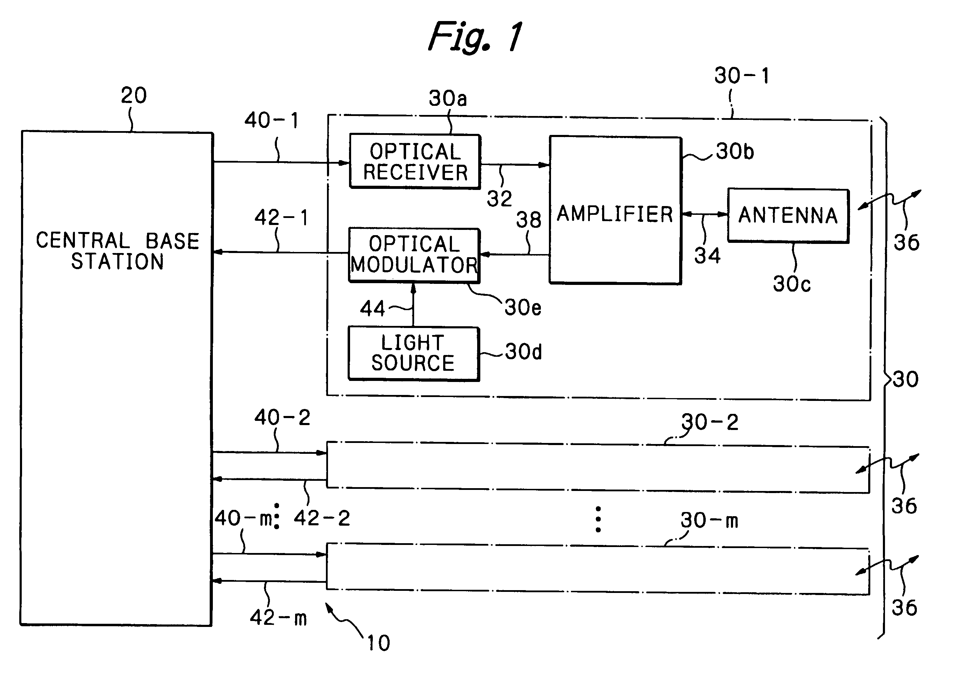

Referring to FIG. 1 of the drawings, an RVC system embodying the present invention is shown and implemented as an ROF RVC system. In FIG. 1, part of the ROF RVC system not relevant to the understanding of the present invention is not shown. Signals are designated by reference numerals attached to connection lines on which they appear.

As shown in FIG. 1, the ROF RVC system, generally 10, includes a central base station 20 for generating modulated radio waves, and *m* local base stations 30-1 through 30-m. The local base station 30-1 is connected to the central base station 20 by two optical fiber cables 40-1 and 42-1 assigned to a down-going channel and an up-going channel, respectively. Likewise, the other local base stations 30-2 through 30-m are connected to the central base station 20 by optical fiber cables 40-2 and 42-2 through 40-m and 42-m, respectively. The central base station 20, optical fiber cables 40-1 through 40-m and 42-1 through 42-m and local base stations 30-1 through 30-m constitute a roadside radio base station in combination.

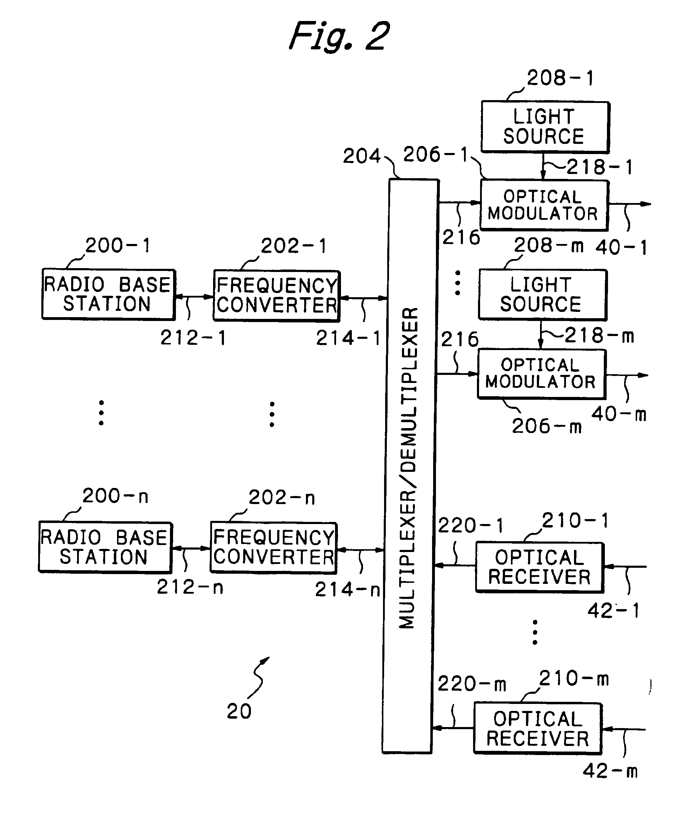

FIG. 2 shows a specific configuration of the central base station 20. As shown, the central base station 20 includes radio base stations 200-1 through 200-n, frequency converters 202-1 through 202-n, multiplexer/demultiplexer 204, optical modulators 206-1 through 206-m, light sources 208-1 through 208-m, and optical receivers 210-1 through 210-m. The radio base station 200-1 receives a radio wave from an information server, not shown, and transfers it to the frequency converter 202-1 as a down-going radio signal 212-1. Also, the radio base station 200-1 receives from the frequency converter 202-1 a signal representative of an information service request and lying in the radio frequency band of an information service, and delivers it as an up-going radio signal 212-1. The other radio base stations up to 212-n operate in exactly the same manner as the radio base station 200-1 except that they transfer down-going radio signals up to 212-n to the associated frequency converters up to 202-n while sending up-going radio signals up to 212-n. The down-going radio signals 212-1 through 212-n each lie in a particular radio frequency band.

The frequency converters 202-1 through 202-n convert the input radio signals 212-1 through 212-n, respectively, to signals lying in a single preselected radio frequency band. Specifically, the radio signals 212-1 through 212-n have various frequencies each corresponding to a particular service, i.e., include frequencies higher than the preselected radio frequency band and frequencies lower than the same. The frequency converters 202-1 through 202-n each input the frequency higher than the preselected radio frequency band to a downconverter thereof, not shown, or input the frequency lower than the same to an upconverter thereof, not shown. As a result, all frequencies are confined in the above frequency band. The resulting signals 214-1 through 214-n are respectively fed from the frequency converters 202-1 through 202-n to the multiplexer/demultiplexer 204.

On the other hand, the multiplexer/demultiplexer 204 delivers signals 214-1 through 214-n confined in the preselected frequency band to the frequency converters 202-1 through 202-n. The frequency converters 202-1 through 202-n respectively input the signals 214-1 through 214-n to the down-converters or the up-converters thereof, thereby outputting the previously mentioned radio signals 212-1 through 212-n each lying in a particular frequency band. The radio signals 212-1 through 212-n are fed to the radio base stations 200-1 through 200-n, respectively.

The multiplexer/demultiplexer 204 adjusts the levels of the signals 214-1 through 214-n and then multiplexes the adjusted signals. More specifically, the multiplexer/demultiplexer 204 multiplexes, e.g., the frequencies of the signals 214-1 through 214-n to thereby confine the signals in the preselected frequency band. The resulting multiplexed signal 216 is sent to all of the *m* local base stations 30 in parallel in the form of down-going radio signals 216.

Further, the multiplexer/demultiplexer 204 receives multiplexed signals 220-1 through 220-m via the optical receivers 210-1 through 210-m, respectively. The multiplexer/demultiplexer 204 demultiplexes the signals 220-1 through 220-m with band-limiting filters, not shown, for thereby outputting *n* signals 214-1 through 214-n. The signals 214-1 through 214-n are respectively input to the frequency converters 202-1 through 202-n. It may occur that the *m* local base stations 30-1 through 30-m, FIG. 1, receive *n* different services. In light of this, the optical receivers 210-1 through 210-m of the multiplexer/demultiplexer 204 additionally have a diversity receiving function.

The light sources 208-1 through 208-m are implemented by laser diodes by way of example. Because the local base stations 30-1 through 30-m, FIG. 1, each cover a particular service area, laser beams to issue from the light sources 208-1 through 208-m may have the same wavelength. Alternatively, the laser beams may be different in wavelength from each other in order to insure the independence of the individual local base station. Laser beams 218-1 through 218-m output from the light sources 208-1 through 208-m are input to the optical modulators 206-1 through 206-m, respectively.

The optical modulators 206-1 through 206-m have an electric-to-optical signal converting function. Specifically, the optical modulators 206-1 through 206-m respectively modulate the intensities of the input laser beams 218-1 through 218-m in accordance with the level of the identical multiplexed signals 216 output form the multiplexer/demultiplexer 204. The modulated laser beams, or optical signals, are sent from the optical modulators 206-1 through 206-m to the local base stations 30-1 through 30-m, respectively, via optical fiber cables 40-1 through 40-m as down-going signals.

The optical receivers 210-1 through 210-m each include, e.g., a photodiode having an optical-to-electric signal converting function. The optical receivers 210-1 through 210-m receive up-going optical signals from the local base stations 30-1 through 30-m, respectively, via the optical fiber cables 42-1 through 42-m and transfer them to the multiplexer/demultiplexer 204 as up-going radio signals 220-1 through 220-m.

Referring again to FIG. 1, the local base stations 30-1 through 30-m, which are identical in configuration, each include an optical receiver 30a, an amplifier 30b, an antenna 30c, a light source 30d, and an optical modulator 30e. The optical receiver 30a includes, e.g., a photodiode having an optical-to-electric signal converting function and receives the down-going optical signal via the optical fiber cable assigned thereto, e.g., the cable 40-1. The optical receiver 30a delivers an electric signal to the amplifier 30b as a down-going radio signal 32.

The amplifier 30b controls the level of the input radio signal 32 and delivers the resulting signal to the antenna 30c as a down-going radio signal 34. The signal 34 is sent via the antenna 30c to a mobile station lying in a service area, not shown, in the form of a radio wave 36. The connection for providing a mobile station with an information service from the central base station 20 via the local base station 30, as stated above, is a downlink. The other connection for sending request information output from a mobile station to the central base station 20 via the local base station 30 and optical fiber cable is an uplink.

The antenna 30c is a multimode antenna capable of receiving an up-going radio signal from a mobile station via the uplink. The received signal is input to the amplifier 30b via the antenna 30c as an up-going radio signal 34.

The amplifier 30b amplifies the input signal 34 to a preselected level and delivers the resulting up-going signal 38 to the optical modulator 30e. The optical modulator 30e modulates the intensity of a laser beam 44 issuing from the light source 30d in accordance with the radio signal 38. The modulated laser beam, or optical signal, output from the optical modulator 30e is sent to the optical receiver 210-1, FIG. 2, included in the central base station 20 via the optical fiber cable 42-1.

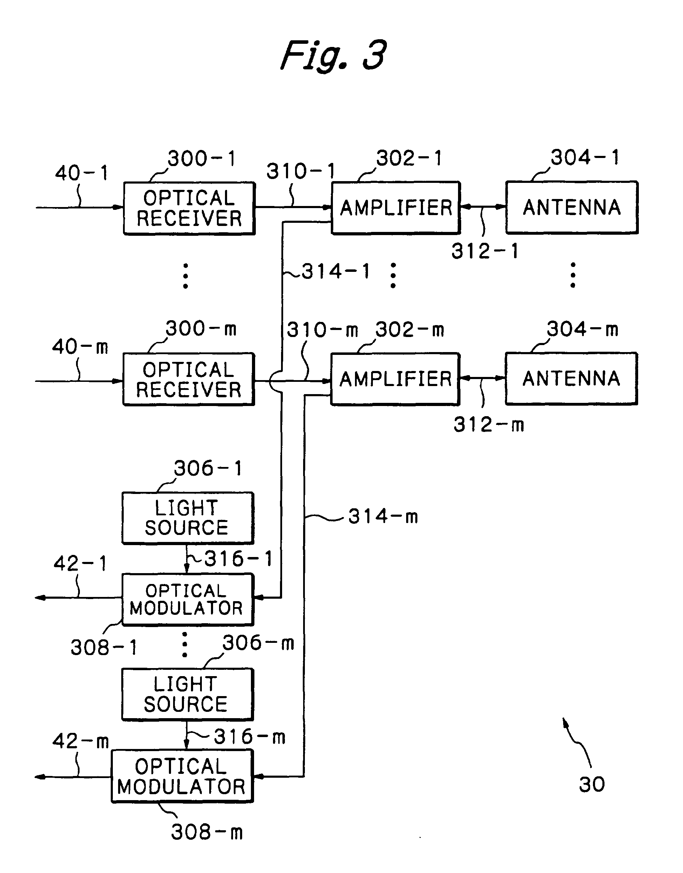

A specific configuration of one of the local base stations 30-1 through 30-m (labeled 30 hereinafter) is shown in FIG. 3. As shown, the local base station 30 has *m* units. Optical receivers 300-1 through 300-m respectively transfer down-going radio signals 310-1 through 310-m produced by photoelectric conversion to amplifiers 302-1 through 302-m. The amplifiers 302-1 through 302-m respectively send amplified down-going radio signals 312-1 through 312-m to mobile stations via antennas 304-1 through 304-m.

Up-going radio signals, not shown, sent from mobile stations lying in a service area, which is covered by the local base station 30, come in through the antennas 304-1 through 304-m. These radio signals are input to the amplifiers 302-1 through 302-m as up-going radio signals 312-1 through 312-m. The amplifiers 302-1 through 302-m respectively control the input signals 312-1 through 312-m to a preselected level and deliver the resulting radio signals 314-1 through 314-m to the optical modulators 308-1 through 308-m, respectively. Light sources 306-1 through 306-m emit laser beams 316-1 through 316-m, respectively. The optical modulators 308-1 through 308-m respectively modulate the intensity of the laser beams 316-1 through 316-m in accordance with the signal levels or intensity of the radio signals 314-1 through 314-m. The modulated laser beams, or optical signals, output from the optical modulators 308-1 through 308-m are sent to the central base station 20 via the optical fiber cables 42-1 through 42-m, respectively.

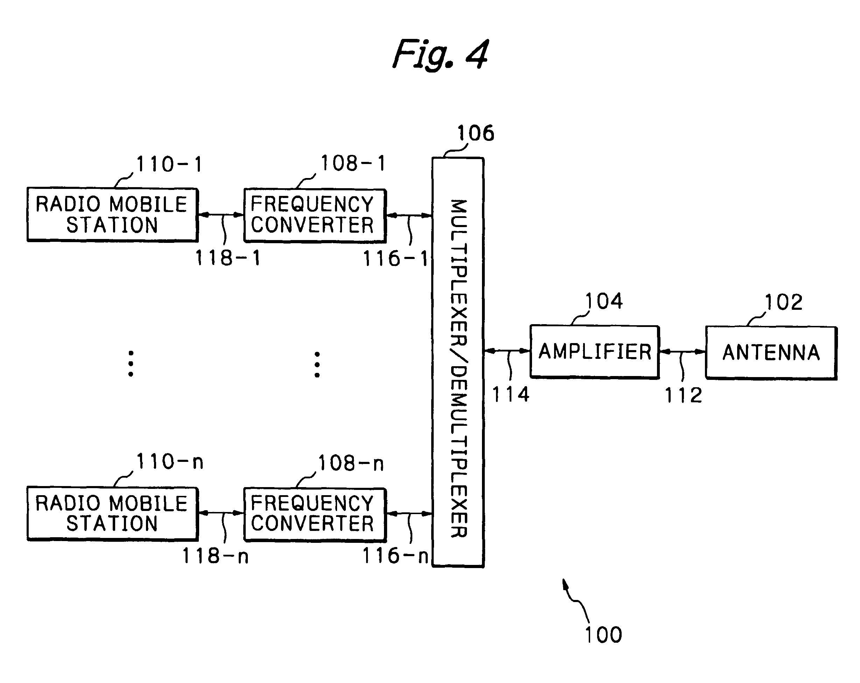

FIG. 4 shows a specific configuration of a mobile station 100. As shown, the mobile station 100 is generally made up of an antenna 102, an amplifier 104, a multiplexer/demultiplexer 106, frequency converters 108-1 through 108-n, and radio mobile stations 110-1 through 110-n.

A down-going radio signal 112 sent via the downlink comes in through the antenna 102, which is a multimode, transmit/receiver antenna. The amplifier 104 amplifies the radio signal 112 to a preselected signal level and delivers the resulting down-going radio signal 114 to the multiplexer/demultiplexer 106. As for the uplink, the amplifier 104 amplifies an up-going radio signal 104 output from the multiplexer/demultiplexer 106 to a preselected signal level and feeds the amplified radio signal to the antenna 102.

The multiplexer/demultiplexer 106 includes a frequency demultiplexer, not shown, implemented by a plurality of bandpass filters each being assigned to a particular frequency band. The frequency demultiplexer demultiplexes the down-going radio signal 114 on a frequency band basis to thereby output down-going radio signals 116-1 through 116-n each lying in a particular frequency band. The radio signals 116-1 through 116-n are input to the frequency converters 108-1 through 108-n, respectively. As for the uplink, the multiplexer/demultiplexer 106 multiplexes up-going radio signals 116-1 through 116-n output from the frequency converters 108-1 through 108-n. The resulting multiplexed signal, which lies in the preselected radio frequency band, is input to the amplifier 104.

The frequency converters 108-1 through 108-n respectively upconvert or downconvert the down-going radio signals 116-1 through 116-n on the downlink and thereby output signals 118-1 through 118-n each lying in a particular original frequency band assigned to an information service. The signals 118-1 through 118-n are input to the radio mobile stations 110-1 through 110-n, respectively. As for the uplink, the radio mobile stations 110-1 through 110-n respectively output up-going signals 118-1 through 118-n each lying in a particular frequency band and representative of a particular information service request. The frequency converters 108-1 through 108-n convert the up-going signals 118-1 through 118-n to signals 116-1 through 116-n lying in a single preselected frequency band. These signals 116-1 through 116-n are input to the multiplexer/demultiplexer 106.

The radio mobile stations 110-1 through 110-n each send a particular information service to the user of the mobile station 100. Also, the radio mobile stations 110-1 through 110-n each send a particular information service request desired by the user.

As stated above, the RVC system 10 confines different radio frequency bands each being assigned to a particular information service in a single preselected frequency band. Bothway communication using the single frequency band facilitates the extension of the system and reduces the number of antennas necessary for each of the local base station 30 and mobile station 100 to a noticeable degree.

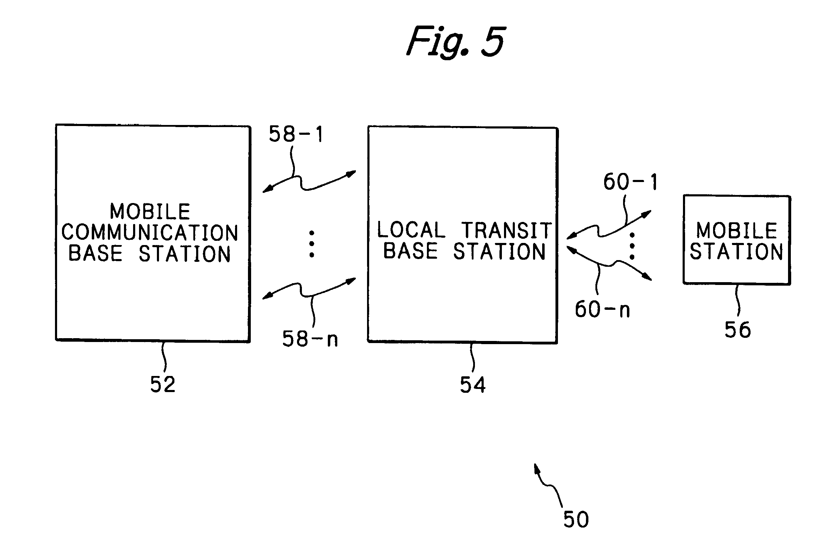

Reference will be made to FIG. 5 for describing a specific reference ROF RVC system for comparison. As shown, the reference ROF RVC system, generally 50, is generally made up of a mobile communication base station 52, a local transit base station 54, and a mobile station 56. The mobile communication base station 52 and local transit base station 54 interchange radio signals 58-1 through 58-n. Likewise, the local transit base station 54 and mobile station 56 interchange radio signals 60-1 through 60-n. In this condition, the user of the mobile station 56 is capable of receiving desired information services.

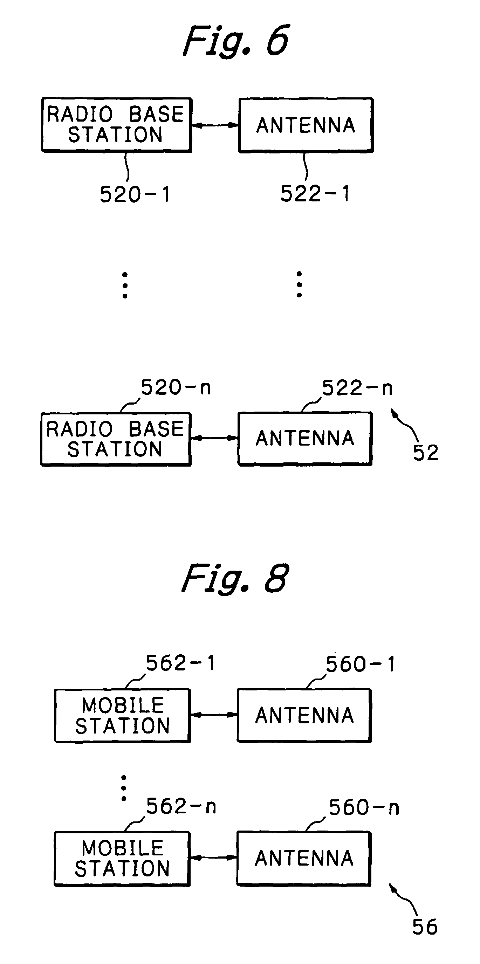

As shown in FIG. 6 specifically, the mobile communication base station 52 includes *n* radio base stations 520-1 through 520-n and *n* antennas 522-1 through 522-n respectively assigned to the radio base stations 520-1 through 520-n. The radio base stations 520-1 through 520-n communicate with the local transit base station 54 via the respective antennas 522-1 through 522-n in order to provide information services or to receive information service requests or similar information. A particular frequency band is assigned to communication between each radio base station and the local base station. The radio base stations 520-1 through 520-n are identical with the radio base stations 200-1 through 200n, FIG. 2, and will not be described specifically in order to avoid redundancy.

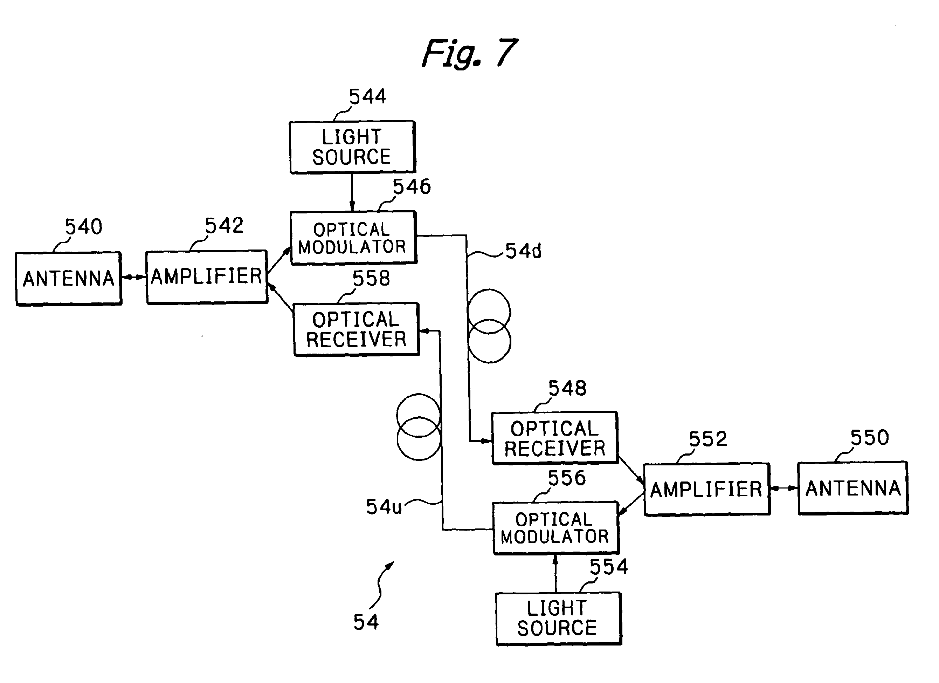

As shown in FIG. 7 specifically, the local transit base station 54 has *n* units corresponding to the *n* radio base stations 520-1 through 520-n of the mobile communication base station 52. The following description will concentrate on one of the *n* units for the sake of simplicity. The one unit will be referred to as the local transit base station 54.

The local transit base station 54 includes antennas 540 and 550, amplifiers 542 and 552, light sources 544 and 554, optical modulators 546 and 556, and optical receivers 548 and 558. The optical modulator 546 and optical receiver 548 are interconnected by an optical fiber cable 54d. Likewise, the optical modulator 556 and optical receiver 558 are interconnected by an optical fiber cable 54u. The amplifiers 542 and 552, light sources 544 and 554 and so forth are identical in construction and operation with the corresponding structural elements of the illustrative embodiment. The antenna 540, amplifier 542, light source 544, optical modulator 546, optical receiver 548, amplifier 552 and antenna 550 are assigned to a downlink. The antenna 550, amplifier 552, light source 554, optical modulator 556, optical receiver 558, amplifier 542 and antenna 540 are assigned to an uplink.

The *n* units of the local transit base station 54 each communicate with the mobile station 56 via the respective antenna 550 by using a particular radio frequency band. The transit base station 54 therefore needs 2n antennas in total for communicating with both of the mobile communication base station 52 and mobile station 56.

FIG. 8 shows a specific configuration of the mobile station 56. As shown, the mobile station 56 includes *n* antennas 560-1 through 560-n and *n* mobile stations 562-1 through 562-n. The mobile station 56 communicates with the local transit base station 54 by radio via the antennas 560-1 through 560-n. The mobile stations 562-1 through 562-n send information service requests via the respective antennas 560-1 through 560-n or receive radio signals representative of information services via the antennas 560-1 through 560-n.

In the above-described ROF RVC system 50 providing information services, the mobile communication base station 52 needs *n* antennas while the local transit base station 54 needs 2n antennas. Further, the mobile station 56 needs *n* antennas. The system 50 therefore needs 4n antennas in total. By contrast, in the illustrative embodiment, the local base station 30 needs only *m* or *n* antennas while the mobile station 100 needs only a single antenna. The ROF RVC system 10 therefor needs totally (n + 1) antennas at most. In this manner, the illustrative embodiment is successful to reduce the number of antennas to a noticeable degree. Particularly, the mobile station 100 needing only a single antenna is desirable from the cost standpoint. Another problem with the conventional ROF RVC system 50 is that an increase or a decrease in the number of information services to be provided effects all of the mobile communication base station 52, local transit base station 54, and mobile station 56.

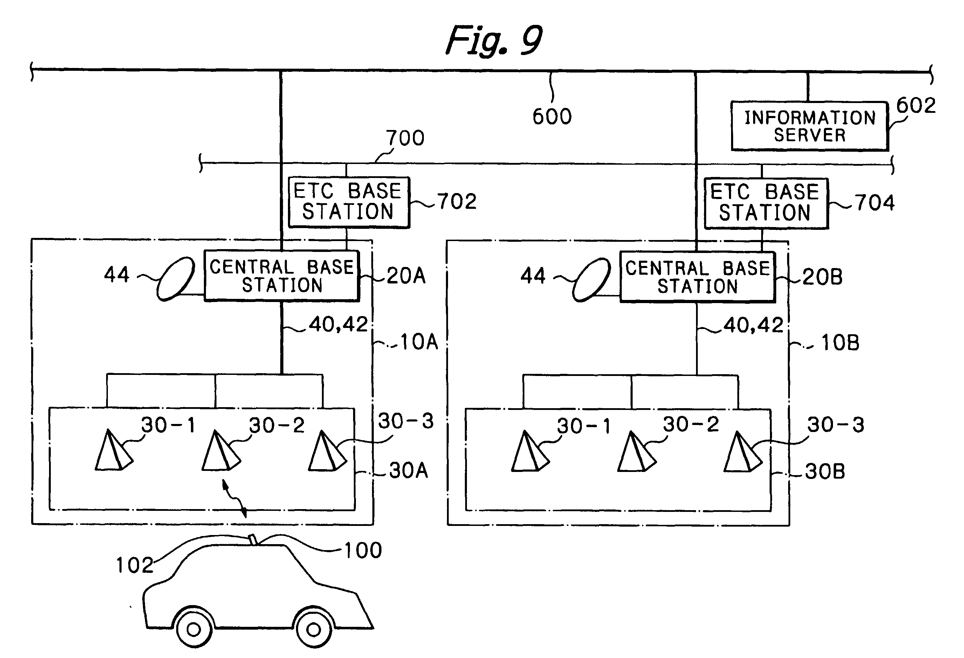

Referring to FIG. 9, a specific ETC system to which the ROF RVC system 10 is applied will be described specifically. As shown, the ETC system includes networks 600 and 700 arranged around toll roads. The network 600 provides DSRC services for an ITS system. The network 700 is an exclusive network for the ETC system. The ROF RVC system 10 is connected to the networks 600 and 700 for providing users with information services.

An information server 602 is connected to the network 600 while ETC base stations 702 and 704 are connected to the network 700. The ETC base stations 702 and 704 are situated at any of tollgates on toll roads, service areas and parking areas. ROF RVC systems 10A and 10B are connected to the network 700 via the ETC base stations 702 and 704, respectively.

The ROF RVC systems 10A and 10B include central base stations 20A and 20B, respectively. Optical fiber cables 40 and 42 connect the central base station 20A and information service area stations 30-1 through 30-3 included in a local base station 30A. Other optical fiber cables 40 and 42 connect the central base station 20B and information service area stations 30-1 through 30-3 included in a local base station 30B. The central base stations 20A and 20B each receive radio waves from BSs and CSs with a satellite antenna 44 so as to provide the mobile station 100 with satellite broadcast services.

Exemplary frequencies available with the RVC system 10 are the frequencies of a tunnel radio system using PHS, e.g., 5.74 GHz, 5.76 GHz, 5.78 GHz, 5.80 GHz, 5.82 GHz, and 5.84 GHz. The transmission output of such frequencies is 10 dB (10 mW). Characteristic parameters include a carrier frequency interval of 20 MHZ, a transmission/receipt frequency interval of 60 MHZ, a transmitter/receiver capacity accommodating two systems, a transmission capacity of 1.5 Mbit/s (megabits per second), IF (Intermediate Frequency) of 130 MHZ for transmission and 70 MHZ for receipt, and an exclusive frequency band of 1.0 MHZ.

The central base stations 20A and 20B each may include service-dependent optical modulators although not shown specifically. The service-dependent optical modulators each modulate light in accordance with particular one of the down-going radio signals 214-1 through 214-n, FIG. 2, fed from the frequency converters 202-1 through 202-1 with a wavelength that differs from one service to another service. The resulting optical signals are input to an optical wavelength multiplexer and multiplexed thereby. The multiplexed signal is sent to the local base stations 30-1 through 30-3 via the optical fiber cables. This also allows each local base station to send information services to the mobile station 100 with a single antenna 30c, FIG. 1.

As stated above, in the illustrative embodiment, the central base station 20 transforms radio signals each lying in a particular radio frequency band assigned to a particular information service to radio signals lying in the same preselected radio frequency band. The radio signals lying in the same radio frequency band are converted to optical signals and then sent to local base stations via optical fiber cables. The local base stations each reconvert the input optical signals to radio signals to thereby send information services to mobile stations via a multimode antenna. A multimode antenna is operable in both of the frequency band of the above radio signals and that of radio signals received from mobile stations. Each mobile station therefore needs only a single antenna.

The illustrative embodiment can therefore surely provide mobile stations with multimedia and other information services even when the number of information services to be deal with by the system increases or decreases. This successfully enhances the general-purpose applicability of the system.

Moreover, because the central base station confines the service-by-service frequencies in a single frequency band, each local base station can be scaled down. Particularly, the individual mobile station can receive multimode information services with a single on-board antenna due to its configuration and the configuration of the base station.

In summary, in accordance with the present invention, an RVC system includes frequency converters and a multiplexer/demultiplexer and can deal with up-going and down-going radio signals in a duplex way. It follows that a local base station covering a single service area needs only a minimum number of antennas without regard to the number of information services available with the system. Even when the number of information services to be handled by the system increases or decreases, the frequency converters and multiplexer/demultiplexer insure the provision of multimedia and other information services without any system modification and thereby enhance the general-purpose applicability of the system.

Moreover, each mobile station needs only a single antenna because of the shared radio frequency band and multiplexing and demultiplexing operations. Because a central base station confines service-by-service frequencies in a single frequency band, each local base station can be scaled down. Particularly, the individual mobile station can receive multimode information services with a single on-board antenna due to its configuration and the configuration of the base station.

While the present invention has been described with reference to the illustrative embodiment, it is not to be restricted by the embodiment. It is to be appreciated that those skilled in the art can change or modify the embodiment without departing from the scope of the present invention.

## Claims

1. A communication system comprising:
a radio base station; and
a plurality of mobile stations each being communicable with said radio base station by radio for sending an information request via said radio base station and receiving an information via said radio base station;
said radio base station comprising:
a plurality of local base stations (30-1, ..., 30-m) each being communicable with said plurality of mobile stations within a particular area;
a central base station (20) communicable with the information and integrating communication with said plurality of local base stations (30-1, ..., 30-m); and
optical fiber cables (40-1, ..., 40-m, 42-1, ..., 42-m) each being laid between said central base station (20) and a particular local base station (30-1, ..., 30-m);
said plurality of local base stations each comprising:
a downlink optical-to-radiowave signal converter (300-1, ..., 300m) for receiving a down-going optical signal, which is propagated through one of said optical fiber cables (40-1, ..., 40-m, 42-1, ..., 42-m) and contains the information, and converting said optical signal to a down-going radio signal;
a first transmit/receive antenna (304-1, ..., 304-m) for sending the down-going radio signal or receiving an up-going radio signal sent from any one of said mobile stations and containing the information request; and
an uplink optical modulator (308-1, ..., 308-m) for modulating a light of a preselected wavelength in accordance with the up-going radio signal to thereby generate an up-going optical signal;
said central base station (20) comprising:
an uplink optical-to-radiowave signal converter (210-1, ..., 210-m) for receiving the up-going optical signal propagated through the optical fiber cable (40-1, ..., 40-m, 42-1, ..., 42-m) and converting said optical signal to an up-going radio signal;
a downlink optical modulator (206-1, ..., 206-m) for modulating a light of a preselected wavelength output from a downlink light source in accordance with a down-going radio signal containing the information provided by the information server to thereby generate a down-going optical signal;
**characterised in that**:
the communication system is a roadside vehicle communication system;
the radio base station is a roadside radio base station; and
said central base station (20) further comprises:
a first multiplexer (204) for multiplexing a plurality of down-going radio signals each lying in a particular frequency band and distributing a resulting multiplexed signal to said plurality of mobile stations;
a first demultiplexer (204) for demultiplexing a plurality of up-going radio signals received from said plurality of mobile stations on a frequency basis;
a first frequency converter (202-1, ..., 202-n) for upconverting or downconverting a frequency of the up-going radio signal to a particular frequency or upconverting or downconverting a frequency of the down-going radio signal received to a single preselected radio frequency band; and
a radio base station (200-1, ..., 200-n) for sending an up-going radio signal output from said first frequency converter (202-1, ..., 202-n) and lying in the single preselected radio frequency band or receiving the down-going radio signal.

2. A system in accordance with claim 1, wherein said plurality of mobile stations each comprise:
a second transmit/receive antenna (102) for receiving the down-going radio signal from said local base station (30-1, ..., 30-m) and sending the up-going radio signal to said local base station (30-1, ..., 30-m) in a single preselected radio frequency band;
a second multiplexer (106) for multiplexing signals each being representative of a particular information request to thereby generate the up-going radio signal; a second demultiplexer (106) for demultiplexing the down-going radio signal on a frequency basis; and
a plurality of service frequency converters (108-1, ..., 108-n) each for upconverting or downconverting a signal having a particular frequency, which is contained in the down-going radio signal, to a signal whose radio frequency corresponds to a particular information service.

3. A system in accordance with claim 1, wherein said central base station (20) further comprises:
a plurality of service-dependent optical modulator each for modulating light having a particular wavelength, which is assigned to a particular kind of service, in accordance with the down-going signal output from said first frequency converter; and
an optical wavelength multiplexer for multiplexing wavelengths of optical signals output from said plurality of service-dependent optical modulators;
a wavelength-multiplexed optical signal output from said optical wavelength multiplexer being sent to said local base stations (30-1, ..., 30-m) via said optical fiber cables (40-1, ..., 40-m, 42-1, ..., 42-m).

4. A system in accordance with claim 1, wherein said first multiplexer (204) of said central base station (20) is capable of multiplexing signals different in a kind of service from the down-going radio signals output from said first frequency converters(202-1, ..., 202-n), and distributing a resulting multiplexed signal.

5. A system in accordance with claim 1, wherein said system is connected to an information server and a broadcast receipt and ETC system.

6. A system in accordance with claim 2, wherein said central base station (20) further comprises:
a plurality of service-dependent optical modulator each for modulating light having a particular wavelength, which is assigned to a particular kind of service, in accordance with the down-going signal output from said first frequency converter; and
an optical wavelength multiplexer for multiplexing wavelengths of optical signals output from said plurality of service-dependent optical modulators;
a wavelength-multiplexed optical signal output from said optical wavelength multiplexer being sent to said local base stations (30-1, ..., 30-m) via said optical fiber cables (40-1, ..., 40-m, 42-1, ..., 42-m).

7. A system in accordance with claim 6, wherein said first multiplexer (204) of said central base station (20) is capable of multiplexing signals different in a kind of service from the down-going radio signals output from said first frequency converters (202-1 ..., 202-n), and distributing a resulting multiplexed signal.

8. A system in accordance with claim 7, wherein said system is connected to an information server and a broadcast receipt and ETC system.

## Patentansprüche

1. Kommunikationssystem, umfassend:
eine Funk-Basisstation; und
eine Vielzahl von Mobilstationen, die jeweils per Funk mit der Funk-Basisstation kommunizieren können, zum Senden einer Informationsanforderung über die Funk-Basisstation und Empfangen von Informationen über die Funk-Basisstation;
wobei die Funk-Basisstation umfasst:
eine Vielzahl von lokalen Basisstationen (30-1, ..., 30-m), die jeweils innerhalb eines bestimmten Gebiets mit der Vielzahl von Mobilstationen kommunizieren können;
eine zentrale Basisstation (20), die mit den informationen kommunizieren kann und die Kommunikation mit der Vielzahl von lokalen Basisstationen (30-1, ..., 30-m) integriert; und
Lichtwellenleiter (40-1, ..., 40-m, 42-1, ..., 42-m), die jeweils zwischen der zentralen Basisstation (20) und einer bestimmten lokalen Basisstation (30-1, ..., 30-m) verlegt sind;
wobei die Vielzahl von lokalen Basisstationen jeweils umfassen:
einen Abwärtsverbindungs-Licht/Funkwellen-Signalwandler (300-1, ..., 300-m) zum Empfangen eines heruntergehenden Lichtsignals, welches durch einen der Lichtwellenleiter (40-1, ..., 40-m, 42-1, ..., 42-m) verbreitet wird und die Informationen enthält, und zum Umwandeln des Lichtsignals in ein heruntergehendes Funksignal;
eine erste Sende-/Empfangsantenne (304-1, ..., 304-m) zum Senden des heruntergehenden Funksignals oder zum Empfangen eines hochgehenden Funksignals, das von irgendeiner der Mobilstationen gesendet wird und das die Informationsanforderung enthält; und
einen Aufwärtsverbindungs-Lichtmodulator (308-1, ..., 308-m) zum Modulieren von Licht mit einer vorgewählten Wellenlänge in Übereinstimmung mit dem hochgehenden Funksignal, um dadurch ein hochgehendes Lichtsignal zu erzeugen;
wobei die zentrale Basisstation (20) umfasst:
einen Aufwärtsverbindungs-Licht/Funkwellen-Signalwandler (210-1, ..., 210-m) zum Empfangen des durch den Lichtwellenleiter (40-1, ..., 40-m, 42-1, ..., 42-m) verbreiteten hochgehenden Lichtsignals und zum Umwandeln des Lichtsignals in ein hochgehendes Funksignal;
einen Abwärtsverbindungs-Lichtmodulator (206-1, ..., 206-m) zum Modulieren von Licht mit einer vorgewählten Wellenlänge, das von einer Abwärtsverbindungs-Lichtquelle ausgegeben wird, in Übereinstimmung mit einem heruntergehenden Funksignal, das die Informationen enthält, die vom Informationsserver bereitgestellt werden, um dadurch ein heruntergehendes Lichtsignal zu erzeugen;
**dadurch gekennzeichnet, dass**:
das Kommunikationssystem ein Straßenrand-Fahrzeug-Kommunikationssystem ist;
die Funk-Basisstation eine Straßenrand-Funk-Basisstation ist; und
die zentrale Basisstation (20) weiterhin umfasst:
einen ersten Multiplexer (204) zum Multiplexieren einer Vielzahl von heruntergehenden Funksignalen, die jeweils in einem bestimmten Frequenzband liegen, und zum Verteilen eines resultierenden multiplexierten Signals auf die Vielzahl von Mobilstationen;
einen ersten Demultiplexer (204) zum Demultiplexieren einer Vielzahl von hochgehenden Funksignalen, die von der Vielzahl von Mobilstationen empfangen werden, auf einer Frequenzbasis;
einen ersten Frequenzwandler (202-1, ..., 202-n) zum Aufwärtswandeln oder Abwärtswandeln einer Frequenz des hochgehenden Funksignals in eine bestimmte Frequenz oder zum Aufwärtswandeln oder Abwärtswandeln einer Frequenz des empfangenen heruntergehenden Funksignals in ein einzelnes vorgewähltes Funkfrequenzband; und
eine Funk-Basisstation (200-1, ..., 200-n) zum Senden eines hochgehenden Funksignals, das von dem ersten Frequenzwandler (202-1, ..., 202-n) ausgegeben wird und in dem einzelnen vorgewählten Funkfrequenzband liegt, oder zum Empfangen des heruntergehenden Funksignals.

2. System gemäß Anspruch 1, wobei die Vielzahl von Mobilstationen jeweils umfassen:
eine zweite Sende-/Empfangsantenne (102) zum Empfangen des heruntergehenden Funksignals von der lokalen Basisstation (30-1, ..., 30-m) und zum Senden des hochgehenden Funksignals an die lokale Basisstation (30-1, ..., 30-m) in einem einzelnen vorgewählten Frequenzband;
einen zweiten Multiplexer (106) zum Multiplexieren von Signalen, die jeweils eine bestimmte Informationsanforderung darstellen, um dadurch das hochgehende Funksignal zu erzeugen;
einen zweiten Demultiplexer (106) zum Demultiplexieren des heruntergehenden Funksignals auf einer Frequenzbasis; und
eine Vielzahl von Dienst-Frequenzwandlern (108-1, ..., 108-n) jeweils zum Aufwärtswandeln oder Abwärtswandeln eines Signals mit einer bestimmten Frequenz, welches in dem heruntergehenden Funksignal enthalten ist, in ein Signal, dessen Funkfrequenz einem bestimmten Informationsdienst entspricht.

3. System gemäß Anspruch 1, wobei die zentrale Basisstation (20) weiterhin umfasst:
eine Vielzahl von dienstabhängigen Lichtmodulatoren jeweils zum Modulieren von Licht mit einer bestimmten Wellenlänge, welche einem bestimmten Diensttyp zugeordnet ist, in Übereinstimmung mit dem von dem ersten Frequenzwandler ausgegebenen heruntergehenden Signal; und
einen Lichtwellenlängenmultiplexer zum Multiplexieren der Wellenlängen von Lichtsignalen, die von der Vielzahl von dienstabhängigen Lichtmodulatoren ausgegeben werden;
wobei ein von dem Lichtwellenlängenmultiplexer ausgegebenes wellenlängenmultiplexiertes Lichtsignal über die Lichtwellenleiter (40-1, ..., 40-m, 42-1, ..., 42-m) an die lokalen Basisstationen (30-1, ..., 30-m) gesendet wird.

4. System gemäß Anspruch 1, wobei der erste Multiplexer (204) der zentralen Basisstation (20) imstande ist, Signale zu multiplexieren, die in einem Diensttyp von den abwärtsgehenden Funksignalen verschieden sind, die von den ersten Frequenzwandlern (202-1, ..., 202-n) ausgegeben werden, und zum Verteilen eines resultierenden multiplexierten Signals.

5. System gemäß Anspruch 1, wobei das System mit einem Informationsserver und einem Rundfunkempfangs- und ETC-System verbunden ist.

6. System gemäß Anspruch 2, wobei die zentrale Basisstation (20) weiterhin umfasst:
eine Vielzahl von dienstabhängigen Lichtmodulatoren jeweils zum Modulieren von Licht mit einer bestimmten Wellenlänge, welche einem bestimmten Diensttyp zugeordnet ist, in Übereinstimmung mit dem von dem ersten Frequenzwandler ausgegebenen heruntergehenden Signal; und
einen Lichtwellenlängenmultiplexer zum Multiplexieren der Wellenlängen von Lichtsignalen, die von der Vielzahl von dienstabhängigen Lichtmodulatoren ausgegeben werden;
wobei ein von dem Lichtwellenlängenmultiplexer ausgegebenes wellenlängenmultiplexiertes Lichtsignal über die Lichtwellenleiter (40-1, ..., 40-m, 42-1, ..., 42-m) an die lokalen Basisstationen (30-1, ..., 30-m) gesendet wird.

7. System gemäß Anspruch 6, wobei der erste Multiplexer (204) der zentralen Basisstation (20) imstande ist, Signale zu multiplexieren, die in einem Diensttyp von den abwärtsgehenden Funksignalen verschieden sind, die von den ersten Frequenzwandlern (202-1, ..., 202-n) ausgegeben werden, und zum Verteilen eines resultierenden multiplexierten Signals.

8. System gemäß Anspruch 7, wobei das System mit einem Informationsserver und einem Rundfunkempfangs- und ETC-System verbunden ist.

## Revendications

1. Système de communication comportant:
une station de base radio ; et
une pluralité de stations mobiles, chacune pouvant être en communication radio avec ladite station de base radio en vue de transmettre une demande d'informations via ladite station de base radio et de recevoir des informations via ladite station de base radio ;
ladite station de base radio comportant :
une pluralité de stations de base locales (30-1, ..., 30-m) pouvant chacune être en communication avec ladite pluralité de stations mobiles dans une zone particulière ;
une station de base centrale (20) pouvant être en communication avec les informations et intégrant une communication avec ladite pluralité de stations de base locales (30-1, ..., 30-m) ; et
des câbles à fibre optique (40-1, ..., 40-m, 42-1, ..., 42-m) étant chacun agencés entre ladite station de base centrale (20) et une station de base locale particulière (30-1, ..., 30-m) ;
chaque station de ladite pluralité de stations de base locales comportant :
un convertisseur de signaux optiques en signaux d'onde radio en liaison descendante (300-1, ..., 300m) en vue de recevoir un signal optique descendant, lequel est propagé via l'un desdits câbles à fibre optique (40-1, ..., 40-m, 42-1, ..., 42-m) et contient les informations, et de convertir ledit signal optique en un signal radio descendant ;
une première antenne de transmission / réception (304-1, ..., 304-m) en vue de transmettre le signal radio descendant ou de recevoir un signal radio montant transmis de l'une quelconque desdites stations mobiles et contenant la demande d'informations ; et
un modulateur optique en liaison montante (308-1, ..., 308-m) en vue de moduler une lumière d'une longueur d'onde présélectionnée selon le signal radio montant en vue par conséquent de générer un signal optique montant ;
ladite station de base centrale (20) comportant :
un convertisseur de signaux optiques en signaux d'onde radio en liaison montante (210-1, ..., 210-m) en vue de recevoir le signal optique montant propagé via le câble à fibre optique (40-1, ..., 40-m, 42-1, ..., 42-m) et de convertir ledit signal optique en un signal radio montant ;
un modulateur optique en liaison descendante (206-1, ..., 206-m) en vue de moduler une lumière d'une longueur d'onde présélectionnée générée en sortie à partir d'une source de lumière en liaison descendante selon un signal radio descendant contenant les informations délivrées par le serveur d'informations en vue par conséquent de générer un signal optique descendant ;
**caractérisée en ce que** :
le système de communication est un système de communication de véhicule routier ;
la station de base radio est une station de base radio routière ; et
ladite station de base centrale (20) comporte en outre :
un premier multiplexeur (204) en vue de multiplexer une pluralité de signaux radio descendants dont chacun est agencé dans une bande de fréquence particulière et de distribuer un signal multiplexé résultant à ladite pluralité de stations mobiles ;
un premier démultiplexeur (204) en vue de dé-multiplexer une pluralité de signaux radio montants reçue de ladite pluralité de stations mobiles sur la base d'une fréquence ;
un premier convertisseur de fréquence (202-1, ..., 202-n) en vue de convertir par élévation ou de convertir par abaissement une fréquence du signal radio descendant en une fréquence particulière ou de convertir par élévation ou de convertir par abaissement une fréquence du signal radio descendant reçu en une unique bande de fréquence radio présélectionnée ; et
une station de base radio (200-1, ..., 202-n) en vue de transmettre un signal radio montant généré à partir dudit premier convertisseur de fréquence (202-1, ..., 202-n) et agencé dans la bande de fréquence radio unique présélectionnée ou de recevoir le signal radio descendant.

2. Système selon la revendication 1, dans lequel chaque station de ladite pluralité de stations mobiles comporte :
une seconde antenne de transmission / réception (102) en vue de recevoir le signal radio descendant de ladite station de base locale (30-1, ..., 30-m) et de transmettre le signal radio montant à ladite station de base locale (30-1, ..., 30-m) dans une bande de fréquence radio présélectionnée unique ;
un second multiplexeur (106) en vue de multiplexer des signaux dont chacun est représentatif d'une demande d'informations particulière en vue par conséquent de générer le signal radio montant ; un second démultiplexeur (106) en vue de dé-multiplexer le signal radio descendant sur la base d'une fréquence ; et
une pluralité de convertisseurs de fréquence de service (108-1, ..., 108-n) dont chacun est destiné à convertir par élévation ou à convertir par abaissement un signal ayant une fréquence particulière, qui est contenu dans le signal radio descendant, en un signal dont la fréquence radio correspond à un service d'informations particulier.

3. Système selon la revendication 1, dans lequel ladite station de base centrale (20) comporte en outre :
une pluralité de modulateurs optiques dépendants du service dont chacun est destiné à moduler une lumière ayant une longueur d'onde particulière, qui est affectée à un type de service particulier, selon le signal descendant généré en sortie à partir dudit premier convertisseur de fréquence; et
un multiplexeur de longueur d'onde optique en vue de multiplexer des longueurs d'onde de signaux optiques générés en sortie à partir de ladite pluralité de modulateurs optiques dépendants du service ;
un signal optique de longueur d'onde multiplexée généré en sortie à partir dudit multiplexeur de longueur d'onde optique étant transmis auxdites stations de base locales (30-1, ..., 30-m) via lesdits câbles à fibre optique (40-1, ..., 40-m, 42-1, ..., 42-m).

4. Système selon la revendication 1, dans lequel ledit premier multiplexeur (204) de ladite station de base centrale (20) est en mesure de multiplexer des signaux différents en termes de type de service des signaux radio descendants générés en sortie à partir desdits premiers convertisseurs de fréquence (202-1, ..., 202-n) et de distribuer un signal multiplexé résultant.

5. Système selon la revendication 1, dans lequel ledit système est connecté à un serveur d'informations et à une réception de diffusion, ainsi qu'à un système ETC.

6. Système selon la revendication 2, dans lequel ladite station de base centrale (20) comporte en outre :
une pluralité de modulateurs optiques dépendants du service dont chacun est destiné à moduler une lumière ayant une longueur d'onde particulière, qui est affectée à un type de service particulier, selon le signal descendant généré en sortie à partir dudit premier convertisseur de fréquence ; et
un multiplexeur de longueur d'onde optique en vue de multiplexer des longueurs d'onde de signaux optiques générés en sortie à partir de ladite pluralité de modulateurs optiques dépendants du service ;
un signal optique de longueur d'onde multiplexée généré en sortie à partir dudit multiplexeur de longueur d'onde optique étant transmis auxdites stations de base locales (30-1, ..., 30-m) via lesdits câbles à fibre optique (40-1, ..., 40-m, 42-1, ..., 42-m).

7. Système selon la revendication 6, dans lequel ledit premier multiplexeur (204) de ladite station de base centrale (20) est en mesure de multiplexer des signaux différents en termes de type de service des signaux radio descendants générés en sortie à partir desdits premiers convertisseurs de fréquence (202-1, ..., 202-n) et de distribuer un signal multiplexé résultant.

8. Système selon la revendication 7, dans lequel ledit système est connecté à un serveur d'informations et à une réception de diffusion, ainsi qu'à un système ETC.
